# EUROPEAN PATENT SPECIFICATION

(11) **EP 2 472 920 B1**
(45) Date of publication and mention of the grant of the patent: **01.06.2016**
(21) Application number: 11797491.5
(22) Date of filing: 22.02.2011
(51) Int. Cl.: H04W 48/16

(54) **METHOD FOR OBTAINING NEIGHBOR CELL INFORMATION, AND NETWORK**
VERFAHREN ZUR GEWINNUNG VON NACHBARZELLENINFORMATIONEN UND NETZWERK
PROCÉDÉ D'OBTENTION D'INFORMATIONS DE CELLULE VOISINE, ET RÉSEAU

(30) Priority: 21.06.2010 CN 201010210930
(43) Date of publication of application: 04.07.2012
(73) Proprietor: ZTE Corporation, Shenzhen, Guangdong 518057 (CN)
(72) Inventor: DENG, Yun, Guangdong 518057 (CN); WANG, Guanzhou, Guangdong 518057 (CN); AI, Jianxun, Guangdong 518057 (CN)
(74) Representative: Swindell & Pearson Limited
(86) International application number: PCT/CN2011/071172
(87) International publication number: WO 2011/160460

(56) References cited:
- CN-A- 101 483 912
- CN-A- 101 626 565
- US-A1- 2010 103 845
- Huawei: "Problems of UE handover in the relaying network", , 1 January 2010 (2010-01-01), XP55006108, Retrieved from the Internet: URL:www.3gpp.org [retrieved on 2011-09-02]
- "3rd Generation Partnership Project; Technical Specification Group Radio Access Network; Evolved Universal Terrestrial Radio Access Network (E-UTRAN); X2 application protocol (X2AP) (Release 9)", 3GPP STANDARD; 3GPP TS 36.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.3.0, 14 June 2010 (2010-06-14), pages 1-121, XP050441722, [retrieved on 2010-06-14]
- ZTE: "How RN learns the X2 availability between DeNB and Neigbour eNB", 3GPP DRAFT; R3-102736-HOW RN LEARNS THE X2 AVAILABILITY BETWEEN DENB AND NEIGBOUR ENB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Xi'an; 20101011, 1 October 2010 (2010-10-01), XP050453468, [retrieved on 2010-10-01]

## Description

### Technical Field

The present invention relates to the field of mobile communication, and in particular, to a method for obtaining information of neighbor cell and a mobile communication network.

### Background of the Related Art

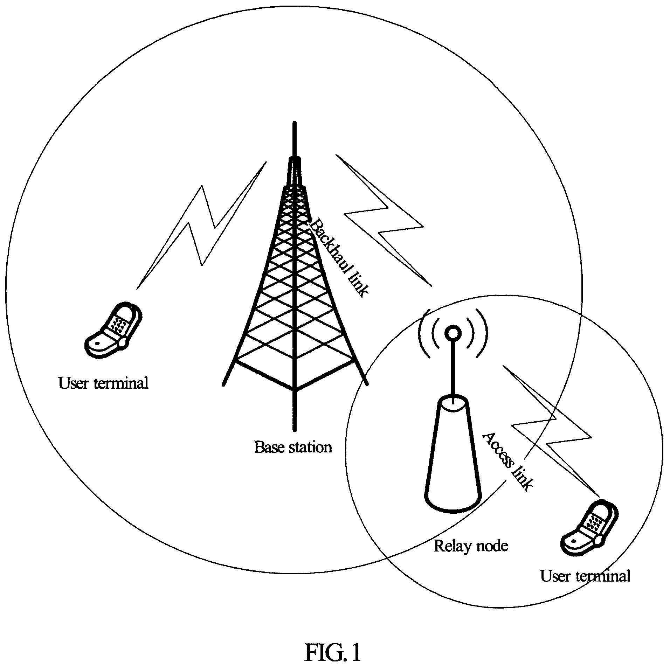

In order to meet the requirement of mobile access at a high speed and a large bandwidth, which is increasing day by day, the third generation partnership projects (abbreviated as 3GPP) introduces the long-term evolution advanced (abbreviated as LTE-Advanced) standard. The LTE-Advanced is an evolution to the long-term evolution (abbreviated as LTE) system, which keeps the core of the LTE, and adopts a series of technology to expand the frequency domain and the space domain on that basis, so as to achieve the objectives, such as improving the spectral utilization and increasing the system capacity, etc. the radio relay technology is one of the technologies in LTE-Advanced, aiming at expanding the coverage of the cell, reducing the blind area in communication, balancing the load, shifting the service of the hotspot area, and saving the transmission power of the user equipment (abbreviated as UE, i.e. the terminal). As shown in FIG. 1, some new relay nodes (abbreviated as RN) are added between the original base station that is, the donor base station (i.e. Donor-eNB) and the UE, and these newly added RNs wirelessly connect to the Donor-eNB. Wherein, the wireless link between the Donor-eNB and the RN is called the backhaul link (can be indicated by Un), and the wireless link between the RN and the UE is called the access link. The downlink data reach the Donor-eNB first, and then are transmitted to the RN, and the RN transmits the data to the UE; for the uplink, it is in the opposite direction.

In order to configure the resource of the backhaul link, the relay-node physical downlink control channel (abbreviated as R-PDCCH), the relay-node physical downlink shared channel (abbreviated as R-PDSCH) and the relay-node physical uplink shared channel (abbreviated as R-PUSCH) are defined. The R-PDCCH signal channel resource can be all or part of the physical resource blocks (abbreviated as PRB) in the sub-frame used for downlink transmission of the backhaul link. The base station allocates the R-PDSCH resource and the R-PUSCH resource for the relay node dynamically or half statically by using the R-PDCCH, wherein, the R-PDSCH resource is used for transmitting the downlink data of the backhaul link, and R-PUSCH resource is used for transmitting the uplink data of the backhaul link.

After the relay node is introduced to the network, in its normal work status, it has the relay function for data transmission between the relay node and the base station and between the relay node and its administered UE. Specifically, between the base station and the RN, the relay function of the RN includes: the function for obtaining the system information, the function for measuring and reporting the measurement report, the function for handover, the function for transmitting data through the R-PDCCH and the R-PDSCH or R-PUSCH, etc. The RN can also administer the cell that belongs to that RN and administer the user equipment in that cell. Between the RN and the UE, the relay function includes the function for sending the system information of the RN, administering the measurement process of the user equipment, administering the handover process of the user equipment, the function for transmitting data between the RN and the user equipment through the physical downlink control channel (abbreviated as PDCCH) and the shared channel (including the physical downlink shared channel, abbreviated as PDSCH) and the physical uplink shared channel (abbreviated as PUSCH) ), etc.

When a user equipment in one cell needs to perform the cell handover, the base station administering that cell (hereafter referred to as the source base station) or the relay node administering that cell (hereafter referred to as the source relay node) can select an appropriate target cell to perform the handover for the user equipment according to the measurement report of that user equipment. In the LTE system, there are two kinds of handover modes: performing the handover through the X2 interface (in that handover mode, the source base station or the source relay node transmits the handover request to the target base station through the X2 interface) and performing the handover through the S1 interface (in that handover mode, the source base station or the source relay node transmits the handover requirement (Handover Required) to the core network through the S1 interface, and the core network transmits the handover signaling to the target base station again). Compared with the S1 interface handover mode, the X2 interface handover has little influence on the core network, and the user equipment can hand over to the target cell more quickly, thus if the X2 interface handover can be used, the source base station will initiate the X2 interface handover preferably. However, according to the current protocol, when the user equipment in the cell administered by the source relay node needs to hand over to the cell administered by the target relay node that is administered by the same base station, the source relay node cannot confirm whether there is an X2 interface with the target relay node, so the source relay node is unable to confirm whether to be able to initiate the X2 interface handover process to the target relay node; similarly, when the user equipment in the cell administered by the source base station needs to hand over to the cell administered by the target relay node that is administered by another base station, the source base station cannot confirm whether there is an X2 interface with the target relay node, so the source base station is also unable to confirm whether to be able to initiate the X2 interface handover process to the target relay node.

Furthermore, since the relay node needs to use the radio resource of its accessed base station, when the load of the base station reaches or exceeds the preset threshold, the relay node needs to hand over part or all of the user equipments in the connection status administered by the relay node to the neighbor cell to reduce the load of the base station. When the relay node selects the target cell according to the measurement report of the user equipment, the selected target cell can not be the cell administered by the base station and can not be the cell administered by the relay node which is administered by that base station, because handing over to these cells can not reduce the load of that base station. The relay node, after accessing the base station, will set up the X2 interface with that base station, and can acquire the configuration information of the cell administered by that base station through the current X2 interface signaling (such as the configuration update message of the base station). However, according to the regulation of the current protocol, the relay node can not acquire the information of other relay nodes administered by its accessed base station, so the relay node can not avoid selecting a cell administered by other relay nodes which is administered by that base station when the base station is overloaded.

Document "Problems of UE handover in the relaying network" (1 January 2010, XP55006108) describes a relay node discovering the availability information of the X2 interfaces between the DeNB and other potential target eNBs before it initiates the handover procedure.

### Summary of the Invention

The technical problem that the present invention requires to solve is to provide a method and network for obtaining information of a neighbor cell, to solve the problem that the source relay node and the source base station cannot obtain the related information to process the handover of the user equipment in the related art.

In order to solve the above-mentioned problem, the present invention provides a method for obtaining information of a neighbor cell as defined in the independent claims.

The method comprises a donor base station carrying indication information or the information of the neighbor cell representing whether each cell is administered by a relay node which is administered by the donor base station in an X2 interface signaling sent to the relay node, wherein, the information of the neighbor cell comprises: information representing whether the donor base station already sets up an X2 interface with other base station.

Wherein,
the relay node receiving the X2 interface signaling is the relay node administered by the base station or the relay node administered by another base station.

Wherein,
when the donor base station sends the X2 interface signaling to the relay node administered by another base station, the X2 interface signaling further comprises the identifier information of the relay node administered by the other base station, or a transport layer bearing the X2 interface signaling comprises IP address information of the relay node administered by the other base station.

Wherein,
the X2 interface signaling is: a base station configuration update, an X2 setup request, an X2 setup response, or other newly added X2 interface signaling.

In order to solve the above-mentioned problem, the present invention further provides a method for obtaining information of a neighbor cell, comprising:
a donor base station carrying cell attribute information in an X2 interface signaling sent to a relay node; wherein, the cell attribute information comprises: the indication information about whether each cell is administered by the relay node which is administered by the donor base station, or the information about whether the other base station to which the cell belongs has an X2 interface with the donor base station; and
after the relay node receives the cell attribute information, updating corresponding cell attribute.

The method further comprises:
the relay node applying the received cell attribute information to a process of target cell selection and/or handover type selection of a user equipment in the administered cell.

Wherein,
when the cell attribute information comprises the indication information about whether the cell is administered by the relay node which is administered by the donor base station, the step of the relay node applying the received indication information to a process of handover type selection of a user equipment in the administered cell comprises: when a user in the cell administered by the relay node needs to perform the cell handover, if the relay node determines that the target cell is administered by the relay node which is administered by the donor base station according to the indication information, then the relay node initiating a handover to an relay node administering the target cell according to the X2 handover mode; and
when the cell attribute information comprises the information about whether the other base station to which the cell belongs has an X2 interface with the donor base station, the step of the relay node applying the received cell attribute information to a process of handover type selection of a user equipment in the administered cell comprises: when the user in the cell administered by the relay node needs to hand over to the target cell administered by the other base station, if the relay node acquires that the other base station has an X2 interface with the donor base station, the relay node initiating a handover to the other base station according to the X2 handover mode; alternatively, if the relay node acquires that the other base station has no X2 interface with the donor base station, the relay node initiating a handover to the other base station according to the S1 handover mode.

Wherein,
when the cell attribute information comprises the indication information about whether the cell is administered by the relay node which is administered by the donor base station, if the relay node is a relay node administered by the donor base station, then the step of the donor base station carrying the cell attribute information in the X2 interface signaling sent to the relay node comprises: the donor base station, after receiving an X2 setup request sent by one relay node administered by the donor base station, carrying configuration information of the cell administered by another relay node which is administered by the donor base station and indication information that each cell administered by the other replay node is administered by the relay node which is administered by the donor base station in an X2 setup response replied by the relay node.

The method further comprises:
the donor base station, after receiving the X2 setup request, respectively sending a signaling which carries the configuration information of the cell administered by the relay node which sends the X2 setup request and the indication information that the cell is administered by the relay node which is administered by the donor base station to other relay nodes administered by the donor base station.

Wherein,
when the cell attribute information comprises indication information about whether the cell is administered by the relay node which is administered by the donor base station, the step of the relay node applying the received indication information to a process of target cell selection of a user equipment in the administered cell comprises:
when the donor base station is overloaded, if the user equipment in the cell administered by the relay node needs to perform the cell handover, then the relay node selecting the cell which is not administered by the donor base station and by the relay node which is administered by the donor base station as the target cell according to the measurement report reported by the user equipment and the received indication information and starting the handover procedure.

Wherein,
if the cell is administered by the relay node which is administered by the donor base station, then the cell attribute information further carries the identifier information of the cell accessed by the relay node which administers each cell.

The method further comprises:
when the cell attribute information comprises the indication information about whether the cell is administered by the relay node which is administered by the donor base station, the step of the relay node applying the received indication information to a process of target cell selection of a user equipment in the administered cell comprises: when the cell administered by the donor base station is overloaded, if one user equipment needs to perform the cell handover, then the relay node which administers the cell to which the user equipment belongs selecting one cell as the target cell from other cells except the overloaded cell and all cells administered by the relay node which accesses the overloaded cell according to the measurement report reported by the user equipment, the received indication information and the identifier information of the cell accessed by the relay node which administers each cell, and starting the handover procedure.

Wherein,
a relay node information cell is added into the X2 interface signaling, and the cell configuration information of the cell administered by the relay node which is administered by the donor base station is added into the newly added relay node information cell.

In order to solve the above-mentioned problem, the present invention further provides a mobile communication as defined in independent claim 11.

The mobile communication network comprises:
a donor base station and a relay node;
the donor base station is configured to carry cell attribute information in an X2 interface signaling sent to the relay node; wherein, the cell attribute information comprises: indication information about whether each cell is administered by the relay node which is administered by the donor base station, or information about whether another base station to which the cell belongs has an X2 interface with the donor base station; and the relay node is configured to update corresponding cell attribute after receiving the cell attribute information.

Wherein,
when the cell attribute information comprises the indication information about whether the cell is administered by the relay node which is administered by the donor base station, the relay node is further configured to apply the received indication information to a process of handover type selection of a user equipment in the administered cell according to the following mode: when a user in the cell administered by the relay node needs to perform the cell handover, if the relay node determines that the target cell is administered by the relay node which is administered by the donor base station according to the indication information, then the relay node initiating a handover to the relay node administering the target cell according to the X2 handover mode; and when the donor base station is overloaded, if the user equipment in the cell administered by the relay node needs to perform the cell handover, then the relay node selecting a cell which is not administered by the donor base station and by the relay node which is administered by the donor base station as the target cell according to the measurement report reported by the user equipment and the received indication information, and starting the handover procedure; and
when the cell attribute information comprises the information about whether the other base station to which the cell belongs has an X2 interface with the donor base station, the relay node is further configured to apply the received cell attribute information to a process of handover type selection of a user equipment in the administered cell according to the following mode: when the user in the cell administered by the relay node needs to hand over to the target cell administered by the other base station, if the relay node acquires that the other base station has an X2 interface with the donor base station, the relay node initiating a handover to the other base station according to the X2 handover mode; alternatively, if the relay node acquires that the other base station has no X2 interface with the donor base station, the relay node initiating a handover to the other base station according to the S 1 handover mode.

Wherein,
when the cell attribute information comprises the indication information about whether the cell is administered by the relay node which is administered by the donor base station, if the cell is administered by the relay node which is administered by the donor base station, then the X2 interface signaling further carries the identifier information of the cell accessed by the relay node which administers each cell;
when the cell administered by the base station is overloaded, if one user equipment needs to perform the cell handover, then the relay node which administers the cell to which the user equipment belongs applies the received indication information to a process of target cell selection of a user equipment in the administered cell according to the following mode:
selecting one cell as the target cell from other cells except the overloaded cell and all cells administered by the relay node which accesses the overloaded cell according to the measurement report reported by the user equipment, the received indication information and the identifier information of the cell accessed by the relay node which administers each cell, and starting the handover procedure.

In order to solve the above-mentioned problem, the present invention also provides a base station, wherein, the base station is a donor base station, and the donor base station is configured to:
carry cell attribute information in an X2 interface signaling sent to the relay node; wherein, the cell attribute information comprises: indication information about whether each cell is administered by the relay node which is administered by the donor base station, or information about whether another base station to which the cell belongs has an X2 interface with the donor base station, to make the relay node update corresponding cell attribute after receiving the cell attribute information.

Wherein,
if the relay node is a relay node administered by the donor base station, then the donor base station is configured to carry the cell attribute information in the X2 interface signaling sent to the relay node by the following mode: the donor base station, after receiving an X2 setup request sent by one relay node administered by the donor base station, carrying configuration information of the cell administered by another relay node which is administered by the donor base station and indication information that each cell administered by the other replay node is administered by the relay node which is administered by the donor base station in an X2 setup response replied to the relay node.

The donor base station is further configured to, after receiving the X2 setup request, respectively send a signaling which carries the configuration information of the cell administered by the relay node which sends the X2 setup request and the indication information that the cell is administered by the relay node which is administered by the donor base station to other relay nodes administered by the donor base station.

Wherein,
if the cell is administered by the relay node which is administered by the donor base station, then the cell attribute information further carries the identifier information of the cell accessed by the relay node which administers each cell.

Wherein,
a relay node information cell is added into the X2 interface signaling, and the cell configuration information of the cell administered by the relay node which is administered by the donor base station is added into the newly added relay node information cell.

In order to solve the above-mentioned problem, the present invention also provides a relay node, wherein, the relay node is configured to:
receive the X2 interface signaling sent by donor base station to the relay node, wherein, the X2 interface signaling carries the cell attribute information; wherein, the cell attribute information includes the indication information about whether each cell is administered by the relay node which is administered by the base station, or the information about whether the other base station to which the cell belongs has an X2 interface with the base station; and
after receiving the cell attribute information, update the corresponding cell attribute.

The relay node is further configured to: apply the received cell attribute information to a process of target cell selection and/or handover type selection of a user equipment in the administered cell.

Wherein,
When the cell attribute information comprises indication information about whether the cell is administered by the relay node which is administered by the donor base station, the relay node is further configured to apply the received indication information to a process of handover type selection of a user equipment in the administered cell according to the following mode: when a user in the cell administered by the relay node needs to perform the cell handover, if the relay node determines that the target cell is administered by the relay node which is administered by the donor base station according to the indication information, then the relay node initiating a handover to the relay node administering the target cell according to the X2 handover mode;
when the cell attribute information comprises the information about whether the other base station to which the cell belongs has an X2 interface with the donor base station, the relay node is further configured to apply the received cell attribute information to a process of handover type selection of a user equipment in the administered cell according to the following mode: when the user in the cell administered by the relay node needs to hand over to the target cell administered by the other base station, if the relay node acquires that the other base station has an X2 interface with the donor base station, the relay node initiating a handover to the other base station according to the X2 handover mode; alternatively, if the relay node acquires that the other base station has no X2 interface with the donor base station, the relay node initiating a handover to the other base station according to the S 1 handover mode.

Wherein,
When the cell attribute information includes the indication information about whether the cell is administered by the relay node which is administered by the donor base station, the relay node, if the relay node is a relay node administered by the donor base station, then the relay node is configured to receive the X2 interface signaling sent by donor base station to the relay node according to the following mode: the relay node sends the X2 setup request to the donor base station administered by itself, receives the X2 setup response replied to the relay node by the donor base station; and the above-mentioned X2 setup response carries the configuration information of the cell administered by other relay node which is administered by the donor base station and the indication information that each cell administered by other relay node is administered by the relay node which is administered by the donor base station.

Wherein,
when the cell attribute information comprises indication information about whether the cell is administered by the relay node which is administered by the donor base station, the relay node is configure to apply the received indication information to a process of target cell selection of a user equipment in the administered cell according to the following mode:
when the donor base station is overloaded, if the user equipment in the cell administered by the relay node needs to perform the cell handover, then the relay node selects the cell which is not administered by the donor base station and by the relay node which is administered by the donor base station as the target cell according to the measurement report reported by the user equipment and the received indication information and starts the handover procedure.

Wherein,
if the cell is administered by the relay node which is administered by the donor base station, then the cell attribute information further carries the identifier information of the cell accessed by the relay node which administers each cell;
when the cell attribute information comprises indication information about whether the cell is administered by the relay node which is administered by the donor base station, the relay node is configure to apply the received indication information to a process of target cell selection of a user equipment in the administered cell according to the following mode: when the cell administered by the donor base station is overloaded, if one user equipment needs to perform the cell handover, then the relay node which administers the cell to which the user equipment belongs selects one cell as the target cell from other cells except the overloaded cell and all cells administered by the relay node which accesses the overloaded cell according to the measurement report reported by the user equipment, the received indication information and the identifier information of the cell accessed by the relay node which administers each cell, and starts the handover procedure.

Wherein,
a relay node information cell is added into the X2 interface signaling, and the cell configuration information of the cell administered by the relay node which is administered by the donor base station is added into the newly added relay node information cell.

After adopting the present invention, the relay node can obtain the configuration information of the cell administered by the base station, and obtain the information about whether another base station has an X2 interface with the donor base station, and can apply in the process of the handover decision of the user equipment accordingly, and can make the relay node select the handover target cell and select the handover type for the user equipment reasonably. The change for the current protocol is minor in the present invention and it is simple to realize and flexible to configure.

### Brief Description of Drawings

FIG. 1 is a structure diagram of a system adopting a wireless relay technology in the related art;
FIG. 2 is a flow chart of a base station and a relay node realizing configuration update;
FIG. 3 is a diagram of a network layout of a base station and a relay node;
FIG. 4 is a flow chart of a relay node and a base station setting up an X2 interface;
FIG. 5 is a flow chart of configuration update of a base station in embodiment 2;
FIG. 6 is a flow chart of configuration update of a base station in embodiment 3;
FIG. 7 is a flow chart of setting up an X2 interface between relay nodes in embodiment 4.

### Preferred Embodiments of the Present Invention

The basic idea of the method for obtaining information of a neighbor cell of the present invention is that: a donor base station carries cell attribute information in an X2 interface signaling sent to a relay node; and the relay node updates corresponding cell attribute after receiving the cell attribute information.

The cell attribute information includes indication information about whether the cell is administered by the relay node which is administered by the donor base station, or information about whether another base station to which the cell belongs has an X2 interface with the donor base station.

Wherein, the X2 interface signaling can be a base station configuration update, an X2 setup request, an X2 setup response, or other newly added X2 interface signaling.

Preferably, a relay node information cell is added into the X2 interface signaling, and the cell configuration information of the cell administered by the relay node is added into the newly added relay node information cell.

The relay node receiving the X2 interface signaling can be a relay node administered by the donor base station or a relay node administered by another base station. When the donor base station sends the X2 interface signaling to the relay node administered by the other base station, the X2 interface signaling further comprises the identifier information of the relay node administered by the other base station, or a transport layer bearing the X2 interface signaling comprises IP address information of the relay node administered by the other base station.

The relay node applies the received cell attribute information to a process of target cell selection and/or handover type selection of a user equipment in the administered cell.

When the cell attribute information includes indication information about whether the cell is administered by the relay node which is administered by the donor base station, the relay node applying the received indication information to a process of handover type selection of a user equipment in the administered cell refers to: when a user in the cell administered by the relay node needs to perform the cell handover, if the relay node determines that the target cell is administered by the relay node which is administered by the donor base station according to the indication information, then the relay node initiating a handover to the relay node administering the target cell according to the X2 handover mode.

When the cell attribute information comprises the information about whether another base station to which the cell belongs has an X2 interface with the donor base station, the relay node applying the received information to a process of handover type selection of a user equipment in the administered cell refers to: when the user in the cell administered by the relay node needs to hand over to the target cell administered by the other base station, if the relay node acquires that the other base station has an X2 interface with the donor base station, the relay node initiating a handover to the other base station according to the X2 handover mode; alternatively, if the relay node acquires that the other base station has no X2 interface with the donor base station, the relay node initiating a handover to the other base station according to the S1 handover mode.

If the relay node is a relay node administered by the donor base station, then the donor base station carrying the indication information which represents whether each cell is administered by the relay node which is administered by the donor base station in the X2 interface signaling sent to the relay node refers to: the donor base station, after receiving an X2 setup request sent by one relay node administered by the donor base station, carrying configuration information of the cell administered by another relay node which is administered by the donor base station and indication information that each cell administered by the other replay node is administered by the relay node which is administered by the donor base station in an X2 setup response replied to the relay node.

The donor base station, after receiving the X2 setup request, respectively sends a signaling which carries the configuration information of the cell administered by the relay node which sends the X2 setup request and the indication information that the cell is administered by the relay node which is administered by the donor base station to other relay nodes administered by the donor base station.

When the cell attribute information comprises indication information about whether the cell is administered by the relay node which is administered by the donor base station, the relay node applying the received indication information to a process of target cell selection of a user equipment in the administered cell refers to:
when the donor base station is overloaded, if the user equipment in the cell administered by the relay node needs to perform the cell handover, then the relay node selects the cell which is not administered by the donor base station and by the relay node which is administered by the donor base station as the target cell according to the measurement report reported by the user equipment and the received indication information, and starts the handover procedure.

If the cell is administered by the relay node which is administered by the donor base station, then the cell attribute information further comprises the identifier information of the cell accessed by the relay node which administers each cell;
when the cell administered by the donor base station is overloaded, if one user equipment needs to perform the cell handover, then the relay node which administers the cell to which the user equipment belongs selects one cell as the target cell from other cells except the overloaded cell and all cells administered by the relay node which accesses the overloaded cell according to the measurement report reported by the user equipment, the received indication information and the identifier information of the cell accessed by the relay node which administers each cell, and starts the handover procedure.

A relay node information cell is added into the X2 interface signaling, and the cell configuration information of the cell administered by the relay node which is administered by the donor base station is added into the newly added relay node information cell.

Furthermore, the mobile communication network described by the present invention includes a donor base station and a relay node; wherein, the relay node is administered by the donor base station;
the donor base station is configured to carry cell attribute information in an X2 interface signaling sent to the relay node.

The relay node is configured to update the cell attribute information, and apply the cell attribute information to a process of target cell selection and/or handover type selection of a user equipment in the administered cell.

The cell attribute information comprises: indication information about whether the cell is administered by the relay node which is administered by the donor base station, or information about whether another base station to which the cell belongs has an X2 interface with the donor base station.

When the cell attribute information comprises indication information about whether the cell is administered by the relay node which is administered by the donor base station, the relay node is further configured to apply the received indication information to a process of handover type selection of a user equipment in the administered cell according to the following mode: when a user in the cell administered by the relay node needs to perform the cell handover, if the relay node determines that the target cell is administered by the relay node which is administered by the donor base station according to the indication information, then the relay node initiating a handover to the relay node administering the target cell according to the X2 handover mode.
when the relay node is a relay node which is administered by the donor base station, then the donor base station is configured to carry the indication information about whether each cell is administered by the relay node which is administered by the donor base station in the X2 interface signaling sent to the relay node by the following mode: the donor base station is configured to, after receiving an X2 setup request sent by one relay node administered by the donor base station, carry the configuration information of the cell administered by the other relay node which is administered by the donor base station and indication information that each cell administered by the other replay node is administered by the relay node which is administered by the donor base station in an X2 setup response replied to the relay node.

The donor base station is further configured to, after receiving the X2 setup request, respectively sending a signaling which carries the configuration information of the cell administered by the relay node which sends the X2 setup request and the indication information that the cell is administered by the relay node which is administered by the donor base station to other relay nodes administered by the donor base station.

The relay node is configured to apply the received indication information to a process of target cell selection of a user equipment in the administered cell according to the following mode:
when the donor base station is overloaded, if the user equipment in the cell administered by the relay node needs to perform the cell handover, then the relay node selects a cell which is not administered by the donor base station and by the relay node which is administered by the donor base station as the target cell according to the measurement report reported by the user equipment and the received indication information, and starts the handover procedure.

If the cell is administered by the relay node which is administered by the donor base station, then the X2 interface signaling further carries the identifier information of the cell accessed by the relay node which administers said each cell;
when the cell administered by the donor base station is overloaded, if one user equipment needs to perform the cell handover, then the relay node which administers the cell to which the user equipment belongs is further configured to select one cell as the target cell from other cells except the overloaded cell and all cells administered by the relay node which accesses the overloaded cell according to the measurement report reported by the user equipment, the received indication information and the identifier information of the cell accessed by the relay node which administers each cell, and start the handover procedure.

When the cell attribute information comprises the information about whether the other base station to which the cell belongs has an X2 interface with the donor base station, the relay node is further configured to apply the received information to a process of handover type selection of a user equipment in the administered cell according to the following mode: when the user in the cell administered by the relay node needs to hand over to the target cell administered by the other base station, if the relay node acquires that the other base station has an X2 interface with the donor base station, the relay node initiating a handover to the other base station according to the X2 handover mode; alternatively, if the relay node acquires that the other base station has no X2 interface with the donor base station, the relay node initiating a handover to the other base station according to the S 1 handover mode.

The embodiment of the present invention is described in detail with reference to the accompanying drawings hereinafter. It should be illustrated that, in the case of not conflicting, the embodiments in the present application and features in these embodiments can be combined arbitrarily.

### Embodiment 1,

in the LTE-A system, there are a plurality of relay nodes in the cell (one cell, cell 1) administered by the base station 1 (the donor base station), called RN_1, RN_2, ..., RN_m respectively, and these relay nodes are in normal work status and can provide service for the user equipments cover by them.

The RN_1, after accessing the cell (cell 1) administered by the base station 1, sets up an X2 interface with the base station 1, and the procedure of setting up the X2 interface includes the following steps:
in step 201, the RN_1 sends an X2 setup request to the base station 1, and the request includes the configuration information of the cell administered by the RN_1 (or called the served cell). The configuration information includes the identifier of the administered cell, the tracing area code (abbreviated as TAC), the public land mobile-communication network (abbreviated as PLMN), the frequency, the bandwidth, and the frame format information, etc. This configuration information is put in the serving cell information. It needs to be illustrated that when the RN_1 access the network and performs the registration (Attach), the base station 1 sets up the data radio bearer (abbreviated as DRB) for the RN_1, and the RN_1 sends the X2 setup request to the base station 1 through the setup data radio bear, that is, the signaling packet of the X2 setup request acts as the data packet of above-mentioned DRB and is sent to the base station 1, and the X2 interface signaling between the relay node and its accessed base station adopts this mode to be sent.

In step 202, the base station 1, after receiving the X2 setup request, returns an X2 setup response to the RN_1, and the response includes the configuration information of the cell (cell 1) administered by the base station 1.

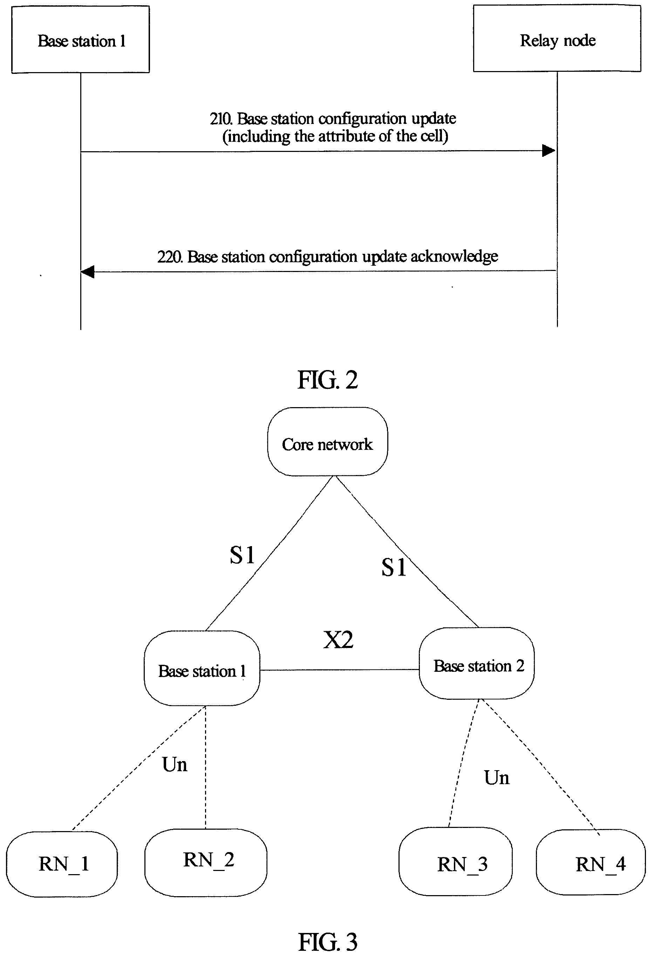

The RN_2 also sets up the X2 interface with the base station 1 after accessing to the cell (cell 1) administered by the base station 1. It can realize the setting up of the X2 interface by adopting the above-mentioned X2 setting up procedure. After the configuration information of the cell administered by the RN_2 is obtained by the base station 1, the base station 1 and the RN_1 realize interaction of the configuration update, and its procedure is shown in FIG. 2:
in step 210, the base station 1 sends the base station configuration update (eNB Configuration Update) to the RN_1. The update signaling not only includes the configuration information of the cell (cell 1) administered by the base station 1, but also includes the configuration information of the cell (cell 2) administered by the RN_2 and the indication information that the RN_2 is administered by the base station 1. For the current network structure, if one relay node can administer a cell, then it can be considered that the relay node has already set up the X2 interface with the base station administering the relay node. So, the indication information representing whether one cell is administered by the relay node which is administered by the base station can be regarded as the indication information representing whether the relay node administering the cell has already set up the X2 interface with the base station administering the relay node. In the present embodiment, the base station 1 configures an information cell representing whether it is a cell administered by the relay node which is administered by the base station to represent the attribute of the two cells. The cell 1 here is not the cell administered by the relay node, so the attribute of the cell 1 is configured as False or 0 (in the embodiment, False or 0 represents that the cell is not the cell administered by the relay node) in the base station configuration update; the attribute of the cell 2 is configured as True or 1 in the base station configuration update, to represent that the network element RN_2 administering the cell 2 is administered by the base station 1.

The current base station configuration update includes the configuration information of the cell (or called the served cell, here the illustration is same in other embodiments) administered by the base station and the configuration information of the neighbor cell (put in the neighbor information). The RN_2 is the relay node administered by the base station 1, and the configuration information of its administered cell can be put in the Served cell Information, and now an information cell representing whether it is administered by the relay node which is administered by the base station is added into the Served cell Information to present that the cell is a cell administered by the relay node; the configuration information of the cell administered by the RN_2 also can be put in the neighbor information, and now the information cell representing whether it is administered by the relay node which is administered by the base station is added into the neighbor information to present that the cell is a cell administered by the relay node; the configuration information of the cell administered by the RN_2 also can be put in the parameters dedicatedly used to represent the information of the relay node, for example, put in the information cell of the newly added Dominated/Managed RN Information or the relay node information (RN Information). Since the administered relay node information already indicates that it is a relay node administered by the base station, so there is no need to add the information cell representing whether it is a cell administered by the relay node which is administered by the base station, however, if the relay node information is used to carry the configuration information of the cell administered by the RN_2, then it needs to add the information cell representing whether it is a cell administered by the relay node which is administered by the base station into the relay node information.

In step 220, the RN_1, after receiving the base station configuration update signaling sent by the base station 1, can acquire the configuration information of the cell (cell 1) administered by the base station and the configuration information of the cell (cell 2) administered by the relay node which is administered by the base station 1. The RN_1 returns a base station configuration update acknowledge (eNB Configuration Update Acknowledge) to the base station.
The RN_1 obtains the configuration information of the cell administered by the base station 1 and the cell administered by the relay node which is administered by the base station 1, and then applies the information to the selection process of the target cell when the UE under the coverage of the RN_1 moves. When the load of the base station 1 is light or does not overload, the RN_1 selects the target cell of the handover for the UE according to the measurement report of the UE; when the load of the base station 1 is heavy (exceeding the preset threshold) or overloads, since the RN_1 administered by the base station 1 needs to occupy the wireless resource, the hardware resource, and the transport layer resource of the S 1 interface of the cell administered by the base station 1, so the RN_1 needs to implement the load balancing, so as to reduce the load of the base station 1, and the RN_1 needs to select the appropriate target cell for the user equipment in the connecting status under its coverage, and needs to avoid selecting the cell accessed by the RN_1 (cell 1), and also needs to avoid selecting the cell administered by another relay node which is administered by the base station 1 (such as the cell 2). In the embodiment, the RN_1 should avoid selecting the cell administered by the RN_2, which is because even the UE hands over to the cell administered by the RN_2, it will still occupy the resources of the base station 1. Now the RN_1 needs to select the cell administered by other base station or the cell administered by the relay node under the other base station for the UE. After the UE is handed over, the load of the base station 1 (or the cell administered by the base station) can be reduced. It needs to be illustrated that the RN_1 can acquire the load information of the base station 1 and the cell administered by the base station 1 through the X2 interface set up between the base station 1 and the RN_1, and the base station 1 can transfer the load information of the current base station and the cell administered by the current base station by sending the resource status update to the RN_1.
When the RN_2 initiates the X2 setup request to the base station 1 according to the above-mentioned procedure, the configuration information of the cell (cell 1) administered by the base station 1 and the configuration information of the cell (cell 1) administered by the RN_1 and the indication information that the RN_1 is administered by the base station 1 can be carried in the X2 setup response returned to the RN_2 by the base station 1. The specific message format can refer to the format of the above-mentioned base station configuration update, thus, the RN_2 can acquire the information of the cell administered by other relay station which is administered by the base station 1 after setting up the X2 connection with the base station 1.

### Embodiment 2,

in the LTE-A system, the diagram of network layout of the base station and the relay node is shown in FIG. 3. The base station 1 and the base station 2 (donor base station) set up the S1 interface with the core network respectively, and an X2 interface is set up between the base station 1 and the base station 2. The cell administered by the base station 1 includes cell 1 and cell 2. Both the RN_1 and the RN_2 connect to the core network through the cell 1, and now are in a normal connection status. Both the RN_1 and the RN_2 have already set up the X2 interface and the S1 interface with the base station 1, and can provide service for their respective covered user equipments. The cell administered by the base station 2 includes a cell 3, and the RN_3 and the RN_4 access the core network through the cell 3 and now are in the normal connection status too.

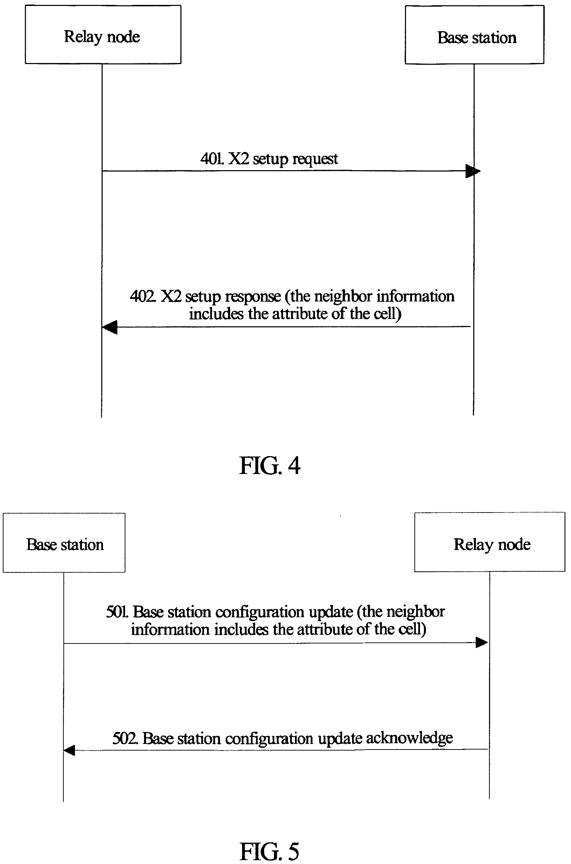

In order to be able to provide service for its covered user equipments, the RN_3 needs to set up the X2 interface and the S 1 interface with the base station 2. The procedure of setting up the X2 interface between the RN_3 and the base station 2 is shown in FIG. 4:
in step 401, the RN_3 sends an X2 setup request to the base station 2, and the request includes the configuration information of the cell administered by the RN_3. The configuration information includes the identifier of the administered cell, the tracing area code (abbreviated as TAC), the public land mobile-communication network (PLMN), the frequency, the bandwidth, and the frame format information, etc.;
in step 402, the base station 2, after receiving the X2 setup request, returns an X2 setup response to the RN_3, and the response includes the configuration information of the cell (cell 3) administered by the base station 2. Since the cell 3 is the cell administered by the base station 2, so the cell 3 configuration information is included in the Served Cell Information cell. In addition, the X2 setup response further includes the neighbor information of the cell 3, and here should include the configuration information of the cell 1, the cell 2, the cell administered by the RN_1 and the cell administered by the RN_2. The configuration information of the neighbor cell in the current protocol includes: the cell global identifier (abbreviated as CGI), physical cell identifier and the frequency information of the cell. In order to realize the present invention, the neighbor information should also include the attribute information of cell, that is, whether the base station to which the cell belongs or the base station administering the relay node to which the cell belongs has already set up the X2 interface with the base station 2, which needs to be represented by adding the information cell in the neighbor information. In the present embodiment, the X2 interface is already set up between the base station 1 and the base station 2 to which the cell 1 and the cell 2 belong, so it can be configured in the neighbor information that the cell 1 and cell 2 have the X2 interface; since both the RN_1 and the RN_2 set up the X2 interface with the base station 1, the base station 1 can realize the proxy function of the X2 interface signaling, So it can be configured in the neighbor information that the neighbor cell administered by the RN_1 and the RN_2 has the X2 interface. It needs to be illustrated that the base station 2 can acquire the attribute of the neighbor cell through the procedure of setting up the X2 interface with other base station, that is, like in the process of the base station 2 setting up the X2 interface with the base station 3, the base station 3 can notify the information that the X2 interface is already set up between the base station 3 and the relay node administered by the base station 3 to the base station 2, and after the base station 2 sets up the X2 interface with the base station 3, the configuration information of the cell managed by the relay station which is administered by the base station 3 and the indication information representing that each above-mentioned cell sets up the X2 interface with the base station 2 is carried in the X2 setup response subsequently sent to the its administered relay station by the base station 2. Meanwhile, it needs to be illustrated that the cell global identifier CGI of the cell administered by the base station is of 28 bits altogether, wherein, the first 20 bits (or the high 20 bits) is the same with the base station identifier, so the relay node can judge whether it is a cell administered by other base station (not the donor base station) through CGI of the cell and administers the base station identifier of the cell.

The RN_3, after obtaining the configuration information and neighbor information of the administered cell sent by the base station 2, applies the information to the process of the handover type selection of the user equipment in the cell administered by the RN_3. Specifically, when the UE1 in the cell administered by the RN_3 is in the connection status and needs to hand over, for example, the RN_3 selects the cell 1 as the handover target cell according to the measurement report reported by the UE1. Since the RN_3 has already acquired that the base station 1 to which the cell 1 belongs already has set up the X2 interface with base station 2 through the X2 setup response, and both the base station 1 and the base station 2 can realize the proxy function of the X2 interface signaling, so the RN_3 selects for the UE1 to perform the handover through the X2 interface. The RN_3 sends a handover request signaling to the base station 2, and the identifier of the target cell is included therein; the base station 2, after receiving the handover request signaling, forwards the handover request signaling to the base station 1 according to the cell identifier therein; the base station 1 processes the received handover request signaling according to the related art, and returns the response to the RN_1 through the base station 2; the RN_3 triggers the UE1 to perform the handover according to the responded content.

When the RN_4 has set up the X2 interface with the base station 2, the RN_4 can acquire the configuration information and the neighbor information of the cell administered by the base station 2 through the above-mentioned X2 setup procedure, then applies the information to the process of the handover type selection of the user equipment in the cell administered by the RN_4. After the RN_4 has set up the X2 interface with the base station 2, since the neighbor information of the base station 2 changes (such as adding a cell administered by the RN_4), the base station 2 will send the base station configuration update signaling to the RN_3 to notify the RN_3 that the configuration information changes, and the specific procedure is shown in FIG. 5, including the following steps:
in step 501, the base station 2 sends the base station configuration update (eNB Configuration Update) to the RN_3, and the update signaling not only includes the configuration information of the cell (cell 3) administered by the base station 2, but also includes the neighbor information of cell 3. Here the neighbor information includes the configuration information of the cell 1, the cell 2, the cell administered by the RN_1, the cell administered by the RN_2, and the cell administered by the RN_4. In order to realize the present invention, the neighbor information also includes the information about whether the base station to which the cell belongs or the base station managing the relay node to which the cell belongs sets up the X2 interface with the present base station (the base station 2). In the present embodiment, it is configured that the base stations to which these cells belong all have the X2 interface with the base station 2 in the neighbor information.
In step 502, after receiving the base station configuration update signaling sent by the base station 2, the RN_3 returns the base station update acknowledge (eNB Configuration Update Acknowledge) to the base station 2.

Similarly, after obtaining the configuration information and the neighbor information of the cell administered by the base station 2, the RN_1 applies the information to the handover type selection of the user equipment in the cell administered by the RN_3: if the base station to which the selected target cell belongs or the base station managing the relay node to which the target cell belongs has already sets up the X2 interface with the base station 2, then the RN_3 implements the handover through the X2 interface, and will send the handover request signaling to the base station to which the target cell belongs or the base station managing the relay node to which the target cell belongs; if the X2 interface is not set up, then the RN_3 implements the handover through the S 1 interface, and will send the handover requirement signaling to the base station to which the selected target cell belongs or the base station managing the relay node to which the target cell belongs. Specially, if the handover target cell is a cell administered by the base station 2, then the RN_1 implements the handover through the X2 interface.

In the present embodiment, the configuration information of the cell administered by the relay node is configured in the neighbor information. Also the configuration information of the cell administered by the relay node can be represented by the information cell of the newly added administered relay node information (Dominated/Managed RN Information) or the relay node information (RN Information) by adopting the method described in the embodiment 1. If the configuration information of the cell administered by of the RN_4 in step 501 is represented by the administered relay node information, then there is no need to add the information about whether the base station to which the cell belongs or the base station managing the relay node to which the cell belongs sets up the X2 interface with the present base station (the base station 2), because the RN_4 must have the X2 interface with the base station 2 in the normal work status. If the configuration information of the cell administered by the RN_1, the cell administered by the RN_2 and the cell administered by the RN_4 in step 501 is represented by the relay node information, then it needs to add the information about whether the base station to which the cell belongs or the base station managing the relay node to which the cell belongs sets up the X2 interface with the present base station (the base station 2).

### Embodiment 3,

In the LTE-A system, the diagram of network layout of the base station and the relay node is shown in FIG. 3. The base station 1 and the base station 2 set up the S1 interface with the core network respectively, and an X2 interface is set up between the base station 1 and the base station 2. The cell administered by the base station includes cell 1 and cell 2. Both the RN_1 and the RN_2 connect to the core network through the cell 1, and are in a normal connection status. Both the RN_1 and the RN_2 have already set up the X2 interface and the S 1 interface with the base station 1, and can provide service for their respective covered user equipments. The cell administered by the base station 2 includes a cell 3, and the RN_3 and the RN_4 access the core network through the cell 3 and are in the normal connection status. Both the RN_3 and the RN_4 have already set up the X2 interface and the S 1 interface with the base station 2, and can provide service for their respective covered user equipments.

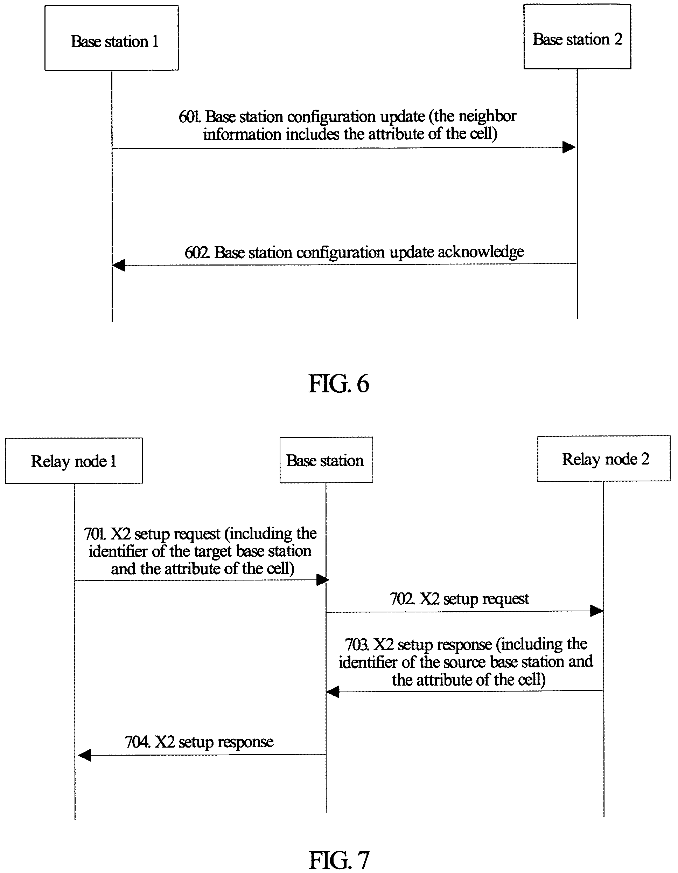

When the configuration parameter of the cell administered by the base station 1 changes (for example, the bandwidth of the cell 1 changes), the base station 1 needs to notify the neighbor base stations (with the X2 interface), and the specific procedure is shown in FIG. 6:
in step 601, the base station 1 sends the base station configuration update (eNB Configuration Update) to the base station 2, and the update signaling not only includes the configuration information of the cells (cell 1 and cell 2) administered by the base station 1, but also includes the neighbor information of cell 1 and cell 2. Here the neighbor information includes the configuration information of the cell administered by the RN_1, the cell administered by the RN_2 and the other possible neighbor cells. In order to realize the present invention, the neighbor information also includes the indication information representing whether the cell is administered by the relay node which is administered by the base station. If the cell is administered by the relay node which is administered by the base station, the above-mentioned neighbor information also includes the identifier information of the cell accessed by the relay node or the identifier information of the base station accessed by the relay node. In the present embodiment, it is configured in the neighbor information that the cells administered by the RN_1 and the RN_2 are all the cells administered by the relay node and that the accessed cells are all cells 1.
In step 602, after receiving the base station configuration update signaling sent by the base station 1, the base station 2 returns the base station update acknowledge (eNB Configuration Update Acknowledge) to the base station 1.

After obtaining the configuration information and the neighbor information of the cell administered by the base station 1, the base station 2 applies the information to the handover type selection of the user equipment in the cell administered by the base station 2: if the selected target cell is a cell administered by the base station 1 or a cell administered by the relay node which is administered by the base station 1 (the cell administered by the RN_1 and the RN_2 in the present embodiment), then the base station 2 implements the handover through the X2 interface, and will send the handover request signaling, or else the base station 2 implements the handover through the S 1 interface, and will send the handover requirement signaling.

### Embodiment 4,

in the LTE-A system, there are a plurality of relay nodes in the cell (one cell or a plurality of cells) administered by the base station 1 (here it indicates any base station allowing the access of a relay node in the system), called RN_1, RN_2, ..., RN_m respectively, and these relay nodes all access the cell administered by the base station 1, and they can access an identical cell and also can access different cells. And these relay nodes are in normal work status and can provide service for its covered user equipments.

These relay nodes all set up the X2 interface with the base station 1 and acquire the information of the cell administered by the base station in the process of setting up the X2 interface according to the procedure described in the embodiment 1. The current X2 interface setup message includes the configuration information of the cell administered by the present base station (also called served cell information) which includes the identifier of the administered cell, the tracing area code (abbreviated as TAC), the public land mobile-communication network (PLMN), the frequency, the bandwidth, and the frame format information, etc. Similarly, the base station 1 also can acquire the configuration information of the cell administered by the relay node. It needs to be illustrated that when the relay node accesses the base station 1, the core network will perform authentication on it, and then notifies the base station 1 that the accessed one is a relay node, and the base station 1 will configure the specific parameters for the relay node so that the relay node can realize the relay function.

The X2 interface can be set up between these relay nodes in the cell administered by the base station 1. The specific procedure is shown in FIG. 7, and setting up the X2 interface between the RN_1 and the RN_2 is taken as an example here:
in step 701, the RN_1 sends an X2 setup request to the base station 1, and the request includes the identifier of the target RN_2, or the transport layer bearing the request signaling includes the IP address of the target RN_2. The request includes the configuration information of the cell administered by the RN_1. In order to realize the present invention, the request signaling also includes the information cell for the attribute of the cell administered by the RN_1, that is, whether the cell administered by the RN_1 is administered by the relay node which is administered by the base station 1. If it is administered by the relay node which is administered by the base station 1, then the request signaling also includes the identifier of the cell accessed by the RN_1 or the identifier of the base station accessed by the RN_1.
In step 702, the base station 1, after receiving the request signaling, acquires that the request signaling is sent to the RN_2 through the identifier of the RN_2 included in the signaling and or the IP address of the target RN_2 born by the signaling, and the base station 1 forwards the X2 setup request to the RN_2.
In step 703, the RN_2, after receiving the X2 setup request, acquires the attribute of the cell administered by the RN_1 and returns an X2 setup response to the base station 1. The response includes the configuration information of the cell administered by the RN_2. In order to realize the present invention, the request signaling also includes the attribute of the cell administered by the RN_2, that is, the indication information about whether the cell administered by the RN_2 is administered by the relay node which is administered by the base station 1. If it is administered by the relay node which is administered by the base station 1, then the response also includes the identifier of the cell accessed by the RN_2 or the identifier of the base station accessed by the RN_2. The response also includes the identifier of the target network element RN_1 of the response, or the transport layer bearing the response signaling includes the IP address of the target network element RN_1.

The RN_2, after acquiring the attribute of the cell administered by the RN_1, applies the attribute to the target cell selection when the UE moves. When the UE in the connection status under the RN_2 needs to hand over, the RN_2 selects an appropriate target cell according to the measurement report reported by the UE. The service types set up by the UE all include the quality of service (abbreviated as QoS), wherein, it includes the service time delay requirement. When service time delay requirement is lower than a certain threshold, such as lower than 100 milliseconds, the RN_2 has priority to select the cell administered by the macro-base station or the cell administered by non-relay node as the target cell for the UE. Since the backhaul link, that is, the processing for the Un interface, needs to be added when the UE accesses the network in the cell administered by the relay node, extra time delay will be introduced.

In step 704, the base station 1, after receiving the X2 setup response, acquires that the response signaling is sent to the RN_1 through the identifier of the RN_1 included in the signaling and or the IP address of the target RN_1 born by the signaling, and the base station 1 forwards the X2 setup response to the RN_1. Similarly, the RN_1, after obtaining the attribute of the cell administered by the RN_2, applies the attribute to the target cell selection when the UE hands over.

The present embodiment is applied to set up an X2 interface between the relay nodes in an identical base station, and the method of the present embodiment can be used for setting up the X2 interface between the reply nodes belonging to different base stations, wherein only the transferred X2 setup signaling needs to be transmitted among the base stations, and the base station accessed by the relay node needs to determine the target base station required to be sent to.

The present embodiment also discloses a base station, wherein, the base station is a donor base station. The donor base station is configured to:
carry cell attribute information in an X2 interface signaling sent to the relay node; wherein, the cell attribute information comprises: indication information about whether each cell is administered by the relay node which is administered by the donor base station, or information about whether another base station to which the cell belongs has an X2 interface with the donor base station, to make the relay node update corresponding cell attribute after receiving the cell attribute information.

Wherein,
if the relay node is a relay node administered by the donor base station, then the donor base station is configured to carry the cell attribute information in the X2 interface signaling sent to the relay node by the following mode: the donor base station, after receiving an X2 setup request sent by one relay node administered by the donor base station, carrying configuration information of the cell administered by another relay node which is administered by the donor base station and indication information that each cell administered by the other replay node is administered by the relay node which is administered by the donor base station in an X2 setup response replied to the relay node.

The donor base station is further configured to, after receiving the X2 setup request, respectively send a signaling which carries the configuration information of the cell administered by the relay node which sends the X2 setup request and the indication information that the cell is administered by the relay node which is administered by the donor base station to other relay node administered by the donor base station.

Wherein,
if the cell is administered by the relay node which is administered by the donor base station, then the cell attribute information further carries the identifier information of the cell accessed by the relay node which administers said each cell.

Wherein,
a relay node information cell is added into the X2 interface signaling, and the cell configuration information of the cell administered by the relay node which is administered by the donor base station is added into the newly added relay node information cell.

The present embodiment also discloses a relay node, wherein, the relay node is configured to:
receive the X2 interface signaling sent by a donor base station to the relay node, wherein, the X2 interface signaling carries the cell attribute information; wherein, the cell attribute information includes the indication information about whether each cell is administered by the relay node which is administered by the base station, or the information about whether another base station to which the cell belongs has an X2 interface with the base station; and
after receiving the cell attribute information, update the corresponding cell attribute.

The relay node is further configured to: apply the received cell attribute information to a process of target cell selection and/or handover type selection of a user equipment in the administered cell.

Wherein,
When the cell attribute information comprises indication information about whether the cell is administered by the relay node which is administered by the donor base station, the relay node is further configured to apply the received indication information to a process of handover type selection of a user equipment in the administered cell according to the following mode: when a user in the cell administered by the relay node needs to perform the cell handover, if the relay node determines that the target cell is administered by the relay node which is administered by the donor base station according to the indication information, then the relay node initiating a handover to the relay node administering the target cell according to the X2 handover mode;
when the cell attribute information comprises the information about whether another base station to which the cell belongs has an X2 interface with the donor base station, the relay node is further configured to apply the received information to a process of handover type selection of a user equipment in the administered cell according to the following mode: when the user in the cell administered by the relay node needs to hand over to the target cell administered by the other base station, if the relay node acquires that the other base station has an X2 interface with the donor base station, the relay node initiating a handover to the other base station according to the X2 handover mode; alternatively, if the relay node acquires that the other base station has no X2 interface with the donor base station, the relay node initiating a handover to the other base station according to the S 1 handover mode.

Wherein,
When the cell attribute information includes indication information about whether the cell is administered by the relay node which is administered by the donor base station, if the relay node is a relay node administered by the donor base station, then the relay node is configured to receive the X2 interface signaling sent by donor base station to the relay node according to the following mode: the relay node sends the X2 setup request to the donor base station administered by itself, receives the X2 setup response replied to the relay node by the donor base station; and the above-mentioned X2 setup response carries the configuration information of the cell administered by other relay node which is administered by the donor base station and the indication information that each cell administered by other relay node is administered by the relay node which is administered by the donor base station.

Wherein,
when the cell attribute information comprises indication information about whether the cell is administered by the relay node which is administered by the donor base station, the relay node is configure to apply the received indication information to a process of target cell selection of a user equipment in the administered cell according to the following mode:
when the donor base station is overloaded, if the user equipment in the cell administered by the relay node needs to perform the cell handover, then the relay node selects the cell which is not administered by the donor base station and the by relay node which is administered by the donor base station as the target cell according to the measurement report reported by the user equipment and the received indication information and starts the handover procedure.

Wherein,
if the cell is administered by the relay node which is administered by the donor base station, then the cell attribute information further carries the identifier information of the cell accessed by the relay node which administers said each cell;
when the cell attribute information comprises indication information about whether the cell is administered by the relay node which is administered by the donor base station, the relay node is configure to apply the received indication information to a process of target cell selection of a user equipment in the administered cell according to the following mode: when the cell administered by the donor base station is overloaded, if one user equipment needs to perform the cell handover, then the relay node which administers the cell to which the user equipment belongs selects one cell as the target cell from other cells except the overloaded cell and all cells administered by the relay node which accesses the overloaded cell according to the measurement report reported by the user equipment, the received indication information and the identifier information of the cell accessed by the relay node which administers said each cell, and starts the handover procedure.

Wherein,
a relay node information cell is added into the X2 interface signaling, and the cell configuration information of the cell administered by the relay node which is administered by the donor base station is added into the newly added relay node information cell.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

### Industrial Applicability

After adopting the present invention, the base station or the relay node can obtain the configuration information of the cell administered by the base station, and can apply the information in the process of the handover decision of the user equipment accordingly, and can make the base station or the relay node select the handover target cell and select the handover type for the user equipment reasonably. The change for the current protocol is minor in the present invention and it is simple to realize and flexible to configure.

## Claims

1. A method for obtaining information of a neighbor cell, comprising:
a donor base station sending to a relay node an X2 interface signaling carrying indication information representing whether a cell is administered by a relay node which is administered by the donor base station or information representing whether the donor base station already sets up an X2 interface with another base station to which the cell belongs, and wherein, the relay node receiving the X2 interface signaling is a relay node administered by the donor base station or a relay node administered by said another base station,
**characterized in that**:
when the X2 interface signaling carries cell attribute information which comprises the indication information representing whether the cell is administered by a relay node which is administered by the donor base station, if the relay node receiving the X2 interface signalling is a relay node administered by the donor base station, then the step of the donor base station sending to the relay node the X2 interface signaling comprises:
the donor base station, after receiving an X2 setup request sent by the relay node administered by the donor base station, replying an X2 setup response to the relay node administered by the donor base station, wherein the X2 setup response carries configuration information of a cell administered by another relay node which is administered by the donor base station and indication information indicating that the cell administered by the another relay node is administered by the another relay node which is administered by the donor base station; and
the relay node administered by the donor base station, after receiving the cell attribute information, updating corresponding cell attribute.

2. The method according to claim 1, wherein,
when the donor base station sends the X2 interface signaling to the relay node administered by said another base station, the X2 interface signaling further comprises identifier information of the relay node administered by said another base station, or a transport layer bearing the X2 interface signaling comprises IP address information of the relay node administered by said another base station.

3. The method according to any one of claims 1 to 2, wherein,
the X2 interface signaling is: a base station configuration update, an X2 setup request, an X2 setup response, or a newly added X2 interface signaling.

4. The method according to claim 1, further comprising:
the donor base station, after receiving the X2 setup request, sending respectively to other relay nodes administered by the donor base station a signaling which carries configuration information of the cell administered by the relay node which is administered by the donor base station and which has sent the X2 setup request and indication information that said cell is administered by said relay node which is administered by the donor base station and which has sent the X2 setup request.

5. The method according to claim 1, further comprising:
the relay node applying the received cell attribute information to a process of target cell selection and/or handover type selection of a user equipment in the cell administered by the relay node.

6. The method according to claim 5, wherein,
when the cell attribute information comprises indication information representing whether the cell is administered by the relay node which is administered by the donor base station, if the relay node is the relay node administered by the donor base station, then the step of the relay node applying the received indication information to a process of handover type selection of a user equipment in the cell administered by the relay node comprises: when the user equipment in the cell administered by the relay node administered by the donor base station needs to perform a cell handover, if the relay node administered by the donor base station determines that a target cell is administered by another one relay node which is administered by the donor base station according to the indication information, then the relay node administered by the donor base station initiating the handover to the another one relay node administering the target cell according to an X2 handover mode; or
when the cell attribute information comprises the information representing whether the donor base station already sets up an X2 interface with another base station to which the cell belongs, if the relay node is the relay node administered by the donor base station, then the step of the relay node applying the received cell attribute information to a process of handover type selection of a user equipment in the cell administered by the relay node comprises: when the user equipment in the cell administered by the relay node administered by the donor base station needs to hand over to a target cell administered by said another base station, if the relay node administered by the donor base station acquires that said another base station has an X2 interface with the donor base station, the relay node administered by the donor base station initiating the handover to said another base station according to an X2 handover mode; alternatively, if the relay node administered by the donor base station acquires that said another base station has no X2 interface with the donor base station, the relay node administered by the donor base station initiating the handover to said another base station according to an S1 handover mode.

7. The method according to claim 5, wherein,
when the cell attribute information comprises the indication information representing whether the cell is administered by the relay node which is administered by the donor base station, if the relay node is the relay node administered by the donor base station, then the step of the relay node applying the received indication information to a process of target cell selection of a user equipment in the cell administered by the relay node comprises:
when the donor base station is overloaded, if the user equipment in the cell administered by the relay node administered by the donor base station needs to perform a cell handover, the relay node administered by the donor base station selecting a cell which is not administered by the donor base station and not administered by any one of relay nodes which are administered by the donor base station as the target cell according to a measurement report reported by the user equipment and the received indication information, and starting the handover procedure.

8. The method according to claim 5, wherein,
if the cell is administered by the relay node which is administered by the donor base station, then the cell attribute information further carries identifier information of the cell accessed by the relay node which administers the cell.

9. The method according to claim 8, further comprising:
when the cell attribute information comprises the indication information representing whether the cell is administered by the relay node which is administered by the donor base station, if the relay node is the relay node administered by the donor base station, then the step of the relay node applying the received indication information to a process of target cell selection of a user equipment in the cell administered by the relay node comprises:
when the cell administered by the donor base station is overloaded, if the user equipment needs to perform a cell handover, then the relay node which is administered by the donor base station and administers the cell to which the user equipment locates selecting one cell as the target cell from other cells except for the overloaded cell and all cells administered by the relay node which accesses the overloaded cell according to the measurement report reported by the user equipment, the received indication information and the identifier information of the cell accessed by the relay node which administers the cell, and starting the handover procedure.

10. The method according to claim 1, wherein,
a relay node information cell is added into the X2 interface signaling, and cell configuration information of the cell administered by the relay node which is administered by the donor base station is added into the newly added relay node information cell.

11. A mobile communication network, comprising: a donor base station and a relay node administered by the donor base station or administered by another base station; wherein
the donor base station is configured to: send to a relay node an X2 interface signaling carrying cell attribute information; wherein, the cell attribute information comprises indication information about whether a cell is administered by a relay node which is administered by the donor base station, or information about whether the donor base station has an X2 interface with another base station to which the cell belongs ; and
the relay node is configured to: receive the X2 interface signaling carrying the cell attribute information, and update corresponding cell attribute after receiving the cell attribute information,
**characterized in that**:
the donor base station is further configured to: when the cell attribute information comprises the indication information about whether the cell is administered by the relay node which is administered by the donor base station, if the relay node is the relay node administered by the donor base station, after receiving an X2 setup request sent by the relay node administered by the donor base station, reply an X2 setup response to the relay node administered by the donor base station, wherein the X2 setup response carries configuration information of a cell administered by another relay node which is administered by the donor base station and indication information indicating that the cell administered by the another relay node is administered by the another relay node which is administered by the donor base station.

12. The network according to claim 11, wherein,
when the cell attribute information comprises the indication information about whether the cell is administered by the relay node which is administered by the donor base station, if the relay node is the relay node administered by the donor base station, then the relay node administered by the donor base station is further configured to apply the received indication information to a process of handover type selection of a user equipment in the cell administered by the relay node administered by the donor base station in the following way:
when the user equipment in the cell administered by the relay node administered by the donor base station needs to perform a cell handover, if the relay node administered by the donor base station determines that a target cell is administered by another one relay node which is administered by the donor base station according to the indication information, initiating the handover to the another one relay node administering the target cell according to an X2 handover mode; or
when the cell attribute information comprises the information about whether the donor base station already sets up an X2 interface with another base station to which the cell belongs, if the relay node is the relay node administered by the donor base station, then the relay node administered by the donor base station is further configured to apply the received cell attribute information to a process of handover type selection of a user equipment in the cell administered by the relay node administered by the donor base station in the following way:
when the user equipment in the cell administered by the relay node administered by the donor base station needs to hand over to a target cell administered by said another base station, if the relay node administered by the donor base station acquires that said another base station has an X2 interface with the donor base station, initiating the handover to said another base station according to an X2 handover mode; alternatively, if the relay node administered by the donor base station acquires that said another base station has no X2 interface with the donor base station, initiating the handover to said another base station according to an S 1 handover mode.

13. The network according to claim 11, wherein,
when the cell attribute information comprises the indication information about whether the cell is administered by the relay node which is administered by the donor base station, if the relay node is the relay node administered by the donor base station, then the relay node administered by the donor base station is further configured to apply the received indication information to a process of target cell selection of a user equipment in the cell administered by the relay node administered by the donor base station in the following way:
when the donor base station is overloaded, if the user equipment in the cell administered by the relay node administered by the donor base station needs to perform a cell handover, selecting a cell which is not administered by the donor base station and not administered by any one of relay nodes which are administered by the donor base station as the target cell according to a measurement report reported by the user equipment and the received indication information, and starting the handover procedure.

14. The network according to claim 11, wherein,
when the cell attribute information comprises the indication information about whether the cell is administered by the relay node which is administered by the donor base station, if the cell is administered by the relay node which is administered by the donor base station, then the X2 interface signaling further carries identifier information of the cell accessed by the relay node which administers the cell;
when the cell administered by the donor base station is overloaded, if a user equipment needs to perform a cell handover, then the relay node which is administered by the donor base station and administers the cell to which the user equipment locates is further configured to apply the received indication information to a process of target cell selection of the user equipment in the cell administered by the relay node in the following way:
selecting one cell as the target cell from other cells except for the overloaded cell and all cells administered by the relay node which accesses the overloaded cell according to the measurement report reported by the user equipment, the received indication information and the identifier information of the cell accessed by the relay node which administers the cell, and starting the handover procedure.

## Patentansprüche

1. Verfahren zum Erhalten von Information einer Nachbarzelle, umfassend:
Senden, von einer Geberbasisstation an einen Weiterleitungsknoten, einer X2-Schnittstellensignalisierung, die Anzeigeinformation trägt, die darstellt, ob eine Zelle von einem Weiterleitungsknoten verwaltet wird, der von der Geberbasisstation verwaltet wird, oder Information, die darstellt, ob die Geberbasisstation bereits eine X2-Schnittstelle mit einer weiteren Basisstation herstellt, zu welcher die Zelle gehört, und wobei der Weiterleitungsknoten, der die X2-Schnittstellensignalisierung empfängt, ein Weiterleitungsknoten ist, der von der Geberbasisstation verwaltet wird, oder ein Weiterleitungsknoten, der von der weiteren Basisstation verwaltet wird,
**dadurch gekennzeichnet, dass**
wenn die X2-Schnittstellensignalisierung Zellattributsinformation trägt, die die Anzeigeinformation umfasst, die darstellt, ob die Zelle von einem Weiterleitungsknoten verwaltet wird, der von der Geberbasisstation verwaltet wird, falls der Weiterleitungsknoten, der die X2-Schnittstellensignalisierung empfängt, ein Weiterleitungsknoten ist, der von der Geberbasisstation verwaltet wird, dann der Schritt des Sendens der X2-Schnittstellensignalisierung von der Geberbasisstation an den Weiterleitungsknoten umfasst:
Erwidern, durch die Geberbasisstation, nach Empfang einer X2-Setup-Anfrage, die von dem Weiterleitungsknoten gesendet wird, der von der Geberbasisstation verwaltet wird, mit einer X2-Setup-Antwort an den Weiterleitungsknoten, der von der Geberbasisstation verwaltet wird, wobei die X2-Setup-Antwort Konfigurationsinformation über eine Zelle trägt, die von einem weiteren Weiterleitungsknoten verwaltet wird, der von der Geberbasisstation verwaltet wird, und Anzeigeinformation, die anzeigt, dass die Zelle, die von dem weiteren Weiterleitungsknoten verwaltet wird, von dem weiteren Weiterleitungsknoten verwaltet wird, der von der Geberbasisstation verwaltet wird; und
Aktualisieren, durch den Weiterleitungsknoten, der von der Geberbasisstation verwaltet wird, nach Empfang der Zellattributsinformation, eines entsprechendes Zellattributes.

2. Verfahren nach Anspruch 1, wobei,
wenn die Geberbasisstation die X2-Schnittstellensignalisierung an den Weiterleitungsknoten sendet, der von der weiteren Basisstation verwaltet wird, die X2-Schnittstellensignalisierung ferner Identifikatorinformation des Weiterleitungsknotens, der von der weiteren Basisstation verwaltet wird, umfasst, oder eine Transportschicht, die die X2-Schnittstellensignalisierung trägt, IP-Adressinformation des Weiterleitungsknotens umfasst, der von der weiteren Basisstation verwaltet wird.

3. Verfahren nach einem der Ansprüche 1 bis 2, wobei,
die X2-Schnittstellensignalisierung eine Basisstationkonfigurationsaktualisierung, eine X2-Setup-Anfrage, eine X2-Setup-Antwort, oder eine neu hinzugefügte X2-Schnittstellensignalisierung ist.

4. Verfahren nach Anspruch 1, ferner umfassend:
Senden, durch die Geberbasisstation, nach Empfangen der X2-Setup-Anfrage, jeweils an weitere Weiterleitungsknoten, die von der Geberbasisstation verwaltet werden, einer Signalisierung, die Konfigurationsinformation der Zelle trägt, die von dem Weiterleitungsknoten verwaltet wird, der von der Geberbasisstation verwaltet wird und der die X2-Setup-Anfrage gesendet hat, und Anzeigeinformation, dass die Zelle von dem Weiterleitungsknoten verwaltet wird, der von der Geberbasisstation verwaltet wird und der die X2-Setup-Anfrage gesendet hat.

5. Verfahren nach Anspruch 1, ferner umfassend:
Anwenden, durch den Weiterleitungsknoten, der empfangenen Zellattributsinformation auf einen Prozess einer Zielzellenauswahl und/oder Handover-Typ-Auswahl eines Benutzergeräts in der Zelle, die von dem Weiterleitungsknoten verwaltet wird.

6. Verfahren nach Anspruch 5, wobei,
wenn die Zellattributsinformation Anzeigeinformation umfasst, die darstellt, ob die Zelle von dem Weiterleitungsknoten verwaltet wird, der von der Geberbasisstation verwaltet wird, falls der Weiterleitungsknoten der Weiterleitungsknoten ist, der von der Geberbasisstation verwaltet wird, dann der Schritt des Anwendens durch den Weiterleitungsknoten der empfangenen Anzeigeinformation auf einen Prozess einer Handover-Typ-Auswahl eines Benutzergeräts in der Zelle, die von dem Weiterleitungsknoten verwaltet wird, umfasst: wenn das Benutzergerät in der Zelle, die von dem Weiterleitungsknoten verwaltet wird, der von der Geberbasisstation verwaltet wird, einen Zellen-Handover durchführen muss, falls der Weiterleitungsknoten, der von der Geberbasisstation verwaltet wird, bestimmt, dass eine Zielzelle von einem weiteren Weiterleitungsknoten verwaltet wird, der von der Geberbasisstation verwaltet wird, gemäß der Anzeigeinformation, dann Initiieren, durch den Weiterleitungsknoten, der von der Geberbasisstation verwaltet wird, des Handovers an den weiteren einen Weiterleitungsknoten, der die Zielzelle verwaltet, gemäß einem X2-Handover-Modus; oder
wenn die Zellattributsinformation die Information umfasst, die darstellt, ob die Geberbasisstation bereits eine X2-Schnittstelle mit einer weiteren Basisstation hergestellt hat, zu welcher die Zelle gehört, falls der Weiterleitungsknoten der Weiterleitungsknoten ist, der von der Geberbasisstation verwaltet wird, dann der Schritt des Anwendens durch den Weiterleitungsknoten der empfangenen Zellattributsinformation auf einen Prozess einer Handover-Typ-Auswahl eines Benutzergeräts in der Zelle, die von dem Weiterleitungsknoten verwaltet wird, umfasst:
wenn das Benutzergerät in der Zelle, die von dem Weiterleitungsknoten verwaltet wird, der von der Geberbasisstation verwaltet wird, einen Handover zu einer Zielzelle durchführen muss, die von der weiteren Basisstation verwaltet wird, falls der Weiterleitungsknoten, der von der Geberbasisstation verwaltet wird, erfasst, dass die weitere Basisstation eine X2-Schnittstelle mit der Geberbasisstation hat, Initiieren des Handovers durch den Weiterleitungsknoten, der von der Geberbasisstation verwaltet wird, zu der weiteren Basisstation, gemäß einem X2-Handover-Modus; alternativ, falls der Weiterleitungsknoten, der von der Geberbasisstation verwaltet wird, erfasst, dass die weitere Basisstation keine X2-Schnittstelle mit der Geberbasisstation hat, Initiieren, durch den Weiterleitungsknoten, der von der Geberbasisstation verwaltet wird, des Handovers zu der weiteren Basisstation, gemäß einem S1-Handover-Modus.

7. Verfahren nach Anspruch 5, wobei,
wenn die Zellattributsinformation die Anzeigeinformation umfasst, die darstellt, ob die Zelle von dem Weiterleitungsknoten verwaltet wird, der von der Geberbasisstation verwaltet wird, falls der Weiterleitungsknoten der Weiterleitungsknoten ist, der von der Geberbasisstation verwaltet wird, dann der Schritt des Anwendens durch den Weiterleitungsknoten der empfangenen Anzeigeinformation auf einen Prozess einer Zielzellenauswahl eines Benutzergeräts in der Zelle, die von dem Weiterleitungsknoten verwaltet wird, umfasst:
wenn die Geberbasisstation überlastet ist, falls das Benutzergerät in der Zelle, die von dem Weiterleitungsknoten verwaltet wird, der von der Geberbasisstation verwaltet wird, einen Zellen-Handover durchführen muss, Auswählen, durch den Weiterleitungsknoten, der von der Geberbasisstation verwaltet wird, einer Zelle, die nicht von der Geberbasisstation verwaltet wird und nicht verwaltet wird von irgendeinem der Weiterleitungsknoten, die von der Geberbasisstation verwaltet werden, als die Zielzelle gemäß einem Messbericht, der von dem Benutzergerät berichtet wird, und der empfangenen Anzeigeinformation, und Beginnen der Handover-Prozedur.

8. Verfahren nach Anspruch 5, wobei,
falls die Zelle von dem Weiterleitungsknoten verwaltet wird, der von der Geberbasisstation verwaltet wird, dann die Zellattributsinformation ferner Identifikatorinformation der Zelle trägt, auf die von dem Weiterleitungsknoten zugegriffen wird, der die Zelle verwaltet.

9. Verfahren nach Anspruch 8, ferner umfassend:
wenn die Zellattributsinformation die Anzeigeinformation umfasst, die darstellt, ob die Zelle von dem Weiterleitungsknoten verwaltet wird, der von der Geberbasisstation verwaltet wird, falls der Weiterleitungsknoten der Weiterleitungsknoten ist, der von der Geberbasisstation verwaltet wird, dann umfasst der Schritt des Anwendens durch den Weiterleitungsknoten der empfangenen Anzeigeinformation auf einen Prozess einer Zielzellen Auswahl eines Benutzergeräts in der Zelle, die von dem Weiterleitungsknoten verwaltet wird:
wenn die Zelle, die von der Geberbasisstation verwaltet wird, überlastet ist, falls das Benutzergerät einen Zellen-Handover durchführen muss, dann Auswählen, durch den Weiterleitungsknoten, der von der Geberbasisstation verwaltet wird und die Zelle verwaltet, zu welcher das Benutzergerät lokalisiert, einer Zelle als die Zielzelle aus anderen Zellen außer der überlasteten Zelle und allen Zellen, die von dem Weiterleitungsknoten verwaltet werden, der auf die überlastete Zelle zugreift, gemäß dem Messbericht, der von der dem Benutzergerät berichtet wird, der empfangenen Anzeigeinformation und der Identifikatorinformation der Zelle, auf die von dem Weiterleitungsknoten zugegriffen wird, der die Zelle verwaltet, und Beginnen der Handover-Prozedur.

10. Verfahren nach Anspruch 1, wobei,
eine Weiterleitungsknoteninformationszelle in die X2-Schnittstellensignalisierung hinzugefügt wird und Zellkonfigurationsinformation der Zelle, die von dem Weiterleitungsknoten verwaltet wird, der von der Geberbasisstation verwaltet wird, in die neu hinzugefügte Weiterleitungsknoteninformationszelle hinzugefügt wird.

11. Mobilkommunikationsnetzwerk, umfassend: eine Geberbasisstation und einen Weiterleitungsknoten, der von der Geberbasisstation verwaltet wird oder der von einer weiteren Basisstation verwaltet wird; wobei
die Geberbasisstation ausgebildet ist zum: Senden, an einen Weiterleitungsknoten, einer X2-Schnittstellensignalisierung, die Zellattributsinformation trägt; wobei die Zellattributsinformation Anzeigeinformation darüber umfasst, ob eine Zelle von einem Weiterleitungsknoten verwaltet wird, der von der Geberbasisstation verwaltet wird, oder Information darüber, ob die Geberbasisstation eine X2-Schnittstelle mit einer weiteren Basisstation hat, zu welcher die Zelle gehört; und
der Weiterleitungsknoten ausgebildet ist zum: Empfangen der X2-Schnittstellensignalisierung, die die Zellattributsinformation trägt, und Aktualisieren eines entsprechenden Zellattributs nach Empfangen der Zellattributsinformation,
**dadurch gekennzeichnet, dass**:
die Geberbasisstation ferner konfiguriert ist zum: wenn die Zellattributsinformation die Anzeigeinformation darüber umfasst, ob die Zelle von dem Weiterleitungsknoten verwaltet wird, der von der Geberbasisstation verwaltet wird, falls der Weiterleitungsknoten der Weiterleitungsknoten ist, der von der Geberbasisstation verwaltet wird, nach Empfangen einer X2-Setup-Anfrage, die von dem Weiterleitungsknoten gesendet wird, der von der Geberbasisstation verwaltet wird, Erwidern mit einer X2-Setup-Antwort an den Weiterleitungsknoten, der von der Geberbasisstation verwaltet wird, wobei die X2-Setup-Antwort Konfigurationsinformation einer Zelle trägt, die von einem weiteren Weiterleitungsknoten verwaltet wird, der von der Geberbasisstation verwaltet wird, und Anzeigeinformation, die anzeigt, dass die Zelle, die von dem weiteren Weiterleitungsknoten verwaltet wird, von dem weiteren Weiterleitungsknoten verwaltet wird, der von der Geberbasisstation verwaltet wird.

12. Netzwerk nach Anspruch 11, wobei,
wenn die Zellattributsinformation die Anzeigeinformation darüber umfasst, ob die Zelle von dem Weiterleitungsknoten verwaltet wird, der von der Geberbasisstation verwaltet wird, falls der Weiterleitungsknoten der Weiterleitungsknoten ist, der von der Geberbasisstation verwaltet wird, dann der Weiterleitungsknoten, der von der Geberbasisstation verwaltet wird, ferner ausgebildet ist, die empfangene Anzeigeinformation auf einen Prozess einer Handover-Typ-Auswahl eines Benutzergeräts in der Zelle, die von dem Weiterleitungsknoten verwaltet wird, der von der Geberbasisstation verwaltet wird, in der folgenden Weise anzuwenden:
wenn das Benutzergerät in der Zelle, die von dem Weiterleitungsknoten verwaltet wird, der von der Geberbasisstation verwaltet wird, einen Zellen-Handover durchführen muss, falls der Weiterleitungsknoten, der von der Geberbasisstation verwaltet wird, bestimmt, dass eine Zielzelle von einem weiteren Weiterleitungsknoten verwaltet wird, der von der Geberbasisstation verwaltet wird, gemäß der Anzeigeinformation, Initiieren des Handovers an den weiteren einen Weiterleitungsknoten, der die Zielzelle verwaltet, gemäß einem X2-Handover-Modus; oder
wenn die Zellattributsinformation die Information darüber umfasst, ob die Geberbasisstation bereits eine X2-Schnittstelle mit einer weiteren Basisstation hergestellt hat, zu welcher die Zelle gehört, falls der Weiterleitungsknoten der Weiterleitungsknoten ist, der von der Geberbasisstation verwaltet wird, dann der Weiterleitungsknoten, der von der Geberbasisstation verwaltet wird, ferner ausgebildet ist, die empfangene Zellattributsinformation auf einen Prozess einer Handover-Typ-Auswahl eines Benutzergeräts in der Zelle, die von dem Weiterleitungsknoten verwaltet wird, der von der Geberbasisstation verwaltet wird, in der folgenden Weise anzuwenden:
wenn das Benutzergerät in der Zelle, die von dem Weiterleitungsknoten verwaltet wird, der von der Geberbasisstation verwaltet wird, einen Handover zu einer Zielzelle durchführen muss, die von der weiteren Basisstation verwaltet wird, falls der Weiterleitungsknoten, der von der Geberbasisstation verwaltet wird, erfasst, dass die weitere Basisstation eine X2-Schnittstelle mit der Geberbasisstation hat, Initiieren des Handovers zu einer weiteren Basisstation gemäß einem X2-Handover-Modus; alternativ, falls der Weiterleitungsknoten, der von der Geberbasisstation verwaltet wird, erfasst, dass die weitere Basisstation keine X2-Schnittstelle mit der Geberbasisstation hat, Initiieren des Handovers zu einer weiteren Basisstation gemäß einem S1-Handover-Modus.

13. Netzwerk nach Anspruch 11, wobei,
wenn die Zellattributsinformation die Anzeigeinformation darüber umfasst, ob die Zelle von dem Weiterleitungsknoten verwaltet wird, der von der Geberbasisstation verwaltet wird, falls der Weiterleitungsknoten der Weiterleitungsknoten ist, der von der Geberbasisstation verwaltet wird, dann der Weiterleitungsknoten, der von der Geberbasisstation verwaltet wird, ferner ausgebildet ist, die empfangene Anzeigeinformation auf einen Prozess einer Zielzellenauswahl eines Benutzergeräts in der Zelle, die von dem Weiterleitungsknoten verwaltet wird, der von der Geberbasisstation verwalten wird, in der folgenden Weise anzuwenden:
wenn die Geberbasisstation überlastet ist, falls das Benutzergerät in der Zelle, die von dem Weiterleitungsknoten verwaltet wird, der von der Geberbasisstation verwaltet wird, einen Zellen-Handover durchführen muss, Auswählen einer Zelle, die nicht von der Geberbasisstation verwaltet wird und nicht verwaltet wird von irgendeiner der Weiterleitungsknoten, die von der Geberbasisstation verwaltet werden, als die Zielzelle gemäß einem Messbericht, der von dem Benutzergerät berichtet wird, und der empfangenen Anzeigeinformation, und Beginnen der Handover-Prozedur.

14. Netzwerk nach Anspruch 11, wobei,
wenn die Zellattributsinformation die Anzeigeinformation darüber umfasst, ob die Zelle von dem Weiterleitungsknoten verwaltet wird, der von der Geberbasisstation verwaltet wird, falls die Zelle von dem Weiterleitungsknoten verwaltet wird, der von der Geberbasisstation verwaltet wird, dann die X2-Schnittstellensignalisierung ferner die Identifikatorinformation der Zelle trägt, auf die von dem Weiterleitungsknoten zugegriffen wird, der die Zelle verwaltet;
wenn die Zelle, die von der Geberbasisstation verwaltet wird, überlastet ist, falls ein Benutzergerät einen Zellen-Handover durchführen muss, dann der Weiterleitungsknoten, der von der Geberbasisstation verwaltet wird und die Zelle verwaltet, zu welcher das Benutzergerät lokalisiert, ferner ausgebildet ist, die empfangene Anzeigeinformation auf einen Prozess einer Zielzellenauswahl eines Benutzergeräts in der Zelle, die von dem Weiterleitungsknoten verwaltet wird, in der folgenden Weise anzuwenden:
Auswählen einer Zelle als die Zielzelle aus anderen Zellen außer der überlasteten Zelle und allen Zellen, die von dem Weiterleitungsknoten verwaltet werden, der auf die überlastete Zelle zugreift, gemäß dem Messbericht, der von der dem Benutzergerät berichtet wird, der empfangenen Anzeigeinformation und der Identifikatorinformation der Zelle, auf die von dem Weiterleitungsknoten zugegriffen wird, der die Zelle verwaltet, und Beginnen der Handover-Prozedur.

## Revendications

1. Procédé d'obtention d'informations d'une cellule voisine, comprenant :
l'envoi par une station de base donneuse à un noeud relais d'une signalisation d'interface X2 portant des informations d'indication indiquant si une cellule est administrée par un noeud relais qui est administré par la station de base donneuse ou des informations indiquant si la station de base donneuse établit déjà une interface X2 avec une autre station de base à laquelle appartient la cellule, et dans lequel le noeud relais recevant la signalisation d'interface X2 est un noeud relais administré par la station de base donneuse ou un noeud relais administré par ladite une autre station de base,
**caractérisé en ce que** :
lorsque la signalisation d'interface X2 porte des informations d'attribut de cellule qui comprennent les informations d'indication indiquant si la cellule est administrée par un noeud relais qui est administré par la station de base donneuse, si le noeud relais recevant la signalisation d'interface X2 est un noeud relais administré par la station de base donneuse, alors l'étape consistant pour la station de base donneuse à envoyer au noeud relais la signalisation d'interface X2 comprend :
l'envoi en réponse, par la station de base donneuse, après réception d'une demande d'établissement de X2 envoyée par le noeud relais administré par la station de base donneuse, d'une réponse d'établissement de X2 au noeud relais administré par la station de base donneuse, dans lequel la réponse d'établissement de X2 porte des informations de configuration d'une cellule administrée par un autre noeud relais qui est administré par la station base donneuse et des informations d'indication indiquant que la cellule administrée par ledit un autre noeud relais est administré par ledit un autre noeud relais qui est administré par la station de base donneuse ; et
la mise à jour par le noeud relais administré par la station de base donneuse, après réception des information d'attribut de cellule de l'attribut de cellule correspondant.

2. Procédé selon la revendication 1, dans lequel,
lorsque la station de base donneuse envoie la signalisation d'interface X2 au noeud relais administré par ladite une autre station de base, la signalisation d'interface X2 comprend en outre des informations d'identifiant du noeud relais administré par ladite une autre station de base, ou une couche de transport portant la signalisation d'interface X2 comprend des informations d'adresse IP du noeud relais administré par ladite une autre station de base.

3. Procédé selon l'une quelconque des revendications 1 à 2, dans lequel, la signalisation d'interface X2 est un des éléments suivants : une mise à jour de configuration de station de base, une demande d'établissement de X2, une réponse d'établissement de X2, ou une signalisation d'interface X2 nouvellement ajoutée.

4. Procédé selon la revendication 1, comprenant en outre :
l'envoi par la station de base donneuse, après réception de la demande d'établissement de X2, respectivement à d'autres noeuds relais administrés par la station de base donneuse, d'une signalisation qui porte des informations de configuration de la cellule administrée par le noeud relais qui est administré par la station de base donneuse et qui a envoyé la demande d'établissement de X2 et des informations d'indication que ladite cellule est administrée par ledit noeud relais qui est administré par la station de base donneuse et qui a envoyé la demande d'établissement de X2.

5. Procédé selon la revendication 1, comprenant en outre :
l'application par le noeud relais des informations d'attribut de cellule reçues à un processus de sélection de cellule cible et / ou de sélection de type de transfert intercellulaire d'un équipement utilisateur dans la cellule administrée par le noeud relais.

6. Procédé selon la revendication 5, dans lequel,
lorsque les informations d'attribut de cellule comprennent des informations d'indication indiquant si la cellule est administrée par le noeud relais qui est administré par la station de base donneuse, si le noeud relais est le noeud relais administré par la station de base donneuse, alors l'étape d'application par le noeud relais des informations d'indication reçues à un processus de sélection de type de transfert intercellulaire d'un équipement utilisateur dans la cellule administrée par le noeud relais comprend : lorsque l'équipement utilisateur dans la cellule administrée par le noeud relais administré par la station de base donneuse a besoin d'effectuer un transfert intercellulaire de cellule, si le noeud relais administré par la station de base donneuse détermine qu'une cellule cible est administrée par un autre noeud relais qui est administré par la station de base donneuse selon les informations d'indication, alors le noeud relais administré par la station de base donneuse initie le transfert intercellulaire vers ledit un autre noeud relais qui administre la cellule cible selon un mode de transfert intercellulaire X2 ; ou
lorsque les informations d'attribut de cellule comprennent les informations indiquant si la station de base donneuse établit déjà une interface X2 avec une autre station de base à laquelle appartient la cellule, si le noeud relais est le noeud relais administré par la station de base donneuse, alors l'étape d'application par le noeud relais des informations d'attribut de cellule reçues à un processus de sélection de type de transfert intercellulaire d'un équipement utilisateur dans la cellule administrée par le noeud relais comprend : lorsque l'équipement utilisateur dans la cellule administrée par le noeud relais administré par la station de base donneuse doit opérer un transfert vers une cellule cible administrée par ladite une autre station de base, si le noeud relais administré par la station de base donneuse acquiert que ladite une autre station de base dispose d'une interface X2 avec la station de base donneuse, l'initiation par le noeud relais administré par la station de base donneuse du transfert intercellulaire vers ladite une autre station de base selon un mode de transfert intercellulaire X2 ; de manière alternative, si le noeud relais administré par la station de base donneuse acquiert que ladite une autre station de base n'a pas d'interface X2 avec la station de base donneuse, l'initiation par le noeud relais administré par la station de base donneuse du transfert intercellulaire vers ladite une autre station de base selon un mode de transfert intercellulaire S1.

7. Procédé selon la revendication 5, dans lequel,
lorsque les informations d'attribut de cellule comprennent les informations d'indication indiquant si la cellule est administrée par le noeud relais qui est administré par la station de base donneuse, si le noeud relais est le noeud relais administré par la station de base donneuse, alors l'étape d'application par le noeud relais des informations d'indication reçues à un processus de sélection de cellule cible d'un équipement utilisateur dans la cellule administrée par le noeud relais comprend les étapes suivantes :
lorsque la station de base donneuse est en surcharge, si l'équipement utilisateur dans la cellule administrée par le noeud relais administré par la station de base donneuse a besoin d'effectuer un transfert intercellulaire de la cellule, le noeud relais administré par la station de base donneuse sélectionne une cellule qui n'est pas administrée par la station de base donneuse et qui n'est pas administrée par l'un quelconque des noeuds relais qui sont administrés par la station de base donneuse en tant que cellule cible selon un rapport de mesure rapporté par l'équipement utilisateur et les informations d'indication reçues, et lance la procédure de transfert intercellulaire.

8. Procédé selon la revendication 5, dans lequel,
si la cellule est administrée par le noeud relais qui est administré par la station de base donneuse, alors les informations d'attribut de cellule portent en outre des informations d'identifiant de la cellule à laquelle le noeud relais qui administre la cellule accède.

9. Procédé selon la revendication 8, comprenant en outre :
lorsque les informations d'attribut de cellule comprennent les informations d'indication indiquant si la cellule est administrée par le noeud relais qui est administré par la station de base donneuse, si le noeud relais est le noeud relais administré par la station de base donneuse, alors l'étape consistant pour le noeud relais à appliquer des informations d'indication reçues à un processus de sélection de cellule cible d'un équipement utilisateur dans la cellule administrée par le noeud relais comprend :
lorsque la cellule administrée par la station de base donneuse est en surcharge, si l'équipement utilisateur a besoin d'effectuer un changement de cellule, alors le noeud relais qui est administré par la station de base donneuse et qui administre la cellule au niveau de laquelle l'équipement utilisateur est localisé sélectionne une cellule en tant que cellule cible parmi d'autres cellules à l'exception de la cellule surchargée et de toutes les cellules administrées par le noeud relais qui accède à la cellule surchargée selon le rapport de mesure rapporté par l'équipement utilisateur, les informations d'indication reçues et les informations d'identifiant de la cellule à laquelle le noeud relais qui administre la cellule accède, et lance la procédure de transfert intercellulaire.

10. Procédé selon la revendication 1, dans lequel,
une cellule d'informations de noeud relais est ajoutée dans la signalisation d'interface X2, et des informations de configuration de cellule de la cellule administrée par le noeud relais qui est administré par la station de base donneuse sont ajoutées dans la cellule d'informations de noeud relais nouvellement ajoutée.

11. Un réseau de communication mobile, comprenant : une station de base donneuse et un noeud relais administré par la station de base donneuse ou administré par une autre station de base ; dans lequel
la station de base donneuse est configurée pour : envoyer à un noeud relais une signalisation d'interface X2 portant des informations d'attribut de cellule ; dans lequel les informations d'attribut de cellule comprennent des informations d'indication permettant de savoir si une cellule est administrée par un noeud relais qui est administré par la station de base donneuse, ou des informations indiquant si la station de base donneuse dispose d'une interface X2 avec une autre station de base à laquelle appartient la cellule ; et
le noeud relais est configuré pour : recevoir la signalisation d'interface X2 portant la cellule d'information d'attribut, et mettre à jour l'attribut de cellule correspondant après réception de la cellule d'information d'attribut,
**caractérisé en ce que** :
la station de base donneuse est en outre configurée pour : lorsque les informations d'attribut de cellule comprennent des informations d'indication permettant de savoir si la cellule est administrée par le noeud relais qui est administré par la station de base donneuse, si le noeud relais est le noeud relais administré par la station de base donneuse, après la réception d'une demande d'établissement de X2 envoyée par le noeud relais administré par la station de base donneuse, envoyer en réponse une réponse d'établissement de X2 au noeud relais administré par la station de base donneuse, dans lequel la réponse d'établissement de X2 porte des informations de configuration d'une cellule administrée par un autre noeud relais qui est administré par la station de base donneuse et des informations d'indication indiquant que la cellule administrée par ledit un autre noeud relais est administré par ledit un autre noeud relais qui est administré par la station de base donneuse.

12. Réseau selon la revendication 11, dans lequel,
lorsque les informations d'attribut de cellule comprennent les informations d'indication permettant de savoir si la cellule est administrée par le noeud relais qui est administré par la station de base donneuse, si le noeud relais est le noeud relais administré par la station de base donneuse, alors le noeud relais administré par la station de base donneuse est en outre configuré pour appliquer les informations d'indication reçues à un processus de sélection de type de transfert intercellulaire d'un équipement utilisateur dans la cellule administrée par le noeud relais administré par la station de base donneuse de la manière suivante :
lorsque l'équipement utilisateur dans la cellule administrée par le noeud relais administré par la station de base donneuse a besoin d'effectuer un transfert intercellulaire, si le noeud relais administré par la station de base donneuse détermine qu'une cellule cible est administrée par un autre noeud relais qui est administré par la station de base donneuse selon les informations d'indication, initier le transfert intercellulaire vers l'autre noeud relais administrant la cellule cible selon un mode de transfert intercellulaire X2 ; ou
lorsque les informations d'attribut de cellule comprennent les informations permettant de savoir si la station de base donneuse établit déjà une interface X2 avec une autre station de base à laquelle appartient la cellule, si le noeud relais est le noeud relais administré par la station de base donneuse, alors le noeud relais administré par la station de base donneuse est en outre configuré pour appliquer les informations d'attribut de cellule reçues à un processus de sélection de type de transfert intercellulaire d'un équipement utilisateur dans la cellule administrée par le noeud relais administré par la station de base donneuse de la manière suivante :
lorsque l'équipement utilisateur dans la cellule administrée par le noeud relais administré par la station de base donneuse doit effectuer un transfert intercellulaire vers une cellule cible administrée par ladite une autre station de base, si le noeud relais administré de la station de base donneuse acquière que ladite une autre station de base dispose d'une interface X2 avec la station de base donneuse, initier le transfert intercellulaire vers ladite une autre station de base selon un mode de transfert intercellulaire X2 ; de manière alternative, si le noeud relais administré par la station de base donneuse, acquiert que ladite une autre station de base n'a pas d'interface X2 avec la station de base donneuse, initier le transfert intercellulaire vers ladite une autre station de base selon un mode de transfert intercellulaire S1.

13. Réseau selon la revendication 11, dans lequel,
lorsque les informations d'attribut de cellule comprennent les informations d'indication permettant de savoir si la cellule est administrée par le noeud relais qui est administré par la station de base donneuse, si le noeud relais est le noeud relais administré par la station de base donneuse, alors le noeud relais administré par la station de base donneuse est en outre configuré pour appliquer les informations l'indication reçues à un processus de sélection de cellule cible d'un équipement utilisateur dans la cellule administrée par le noeud relais administré par la station de base donneuse de la manière suivante :
lorsque la station de base donneuse est en surcharge, si l'équipement utilisateur dans la cellule administrée par le noeud relais administré par la station de base donneuse a besoin d'effectuer un transfert intercellulaire de cellule, sélectionner une cellule qui n'est pas administrée par la station de base donneuse et qui n'est administrée par aucun des noeuds relais qui sont administrés par la station de base donneuse en tant que cellule cible selon un rapport de mesure rapporté par l'équipement utilisateur et les informations d'indication reçus, et lancer la procédure de transfert intercellulaire.

14. Réseau selon la revendication 11, dans lequel,
lorsque les informations d'attribut de cellule comprennent les information d'indication permettant de savoir si la cellule est administrée par le noeud relais qui est administré par la station de base donneuse, si la cellule est administrée par le noeud relais qui est administré par la station de base donneuse, alors la signalisation d'interface X2 porte en outre des informations d'identifiant de la cellule à laquelle le noeud relais qui administre la cellule accède ;
lorsque la cellule administrée par la station de base donneuse est en surcharge, si un équipement utilisateur a besoin d'effectuer un transfert intercellulaire de cellule, alors le noeud relais qui est administré par la station de base donneuse et qui administre la cellule au niveau de laquelle l'équipement utilisateur est localisé est en outre configuré pour appliquer les informations d'indication reçues à un processus de sélection de cellule cible de l'équipement utilisateur dans la cellule administrée par le noeud relais de la manière suivante :
sélectionner une cellule en tant que cellule cible parmi d'autres cellules à l'exception de la cellule surchargée et de toutes les cellules administrées par le noeud relais qui accède à la cellule surchargée selon le rapport de mesure rapporté par l'équipement utilisateur, les informations d'indication reçues et les informations d'identifiant de la cellule à laquelle le noeud relais qui gère la cellule accède, et lancer la procédure de transfert intercellulaire.
